# EUROPÄISCHE PATENTSCHRIFT

(11) **EP 1 350 455 B1**
(45) Veröffentlichungstag und Bekanntmachung des Hinweises auf die Patenterteilung: **01.06.2005**
(21) Anmeldenummer: 03004916.7
(22) Anmeldetag: 06.03.2003
(51) Int. Cl.: A47J 36/26, A47J 27/06

(54) **Elektrischer Babykostwärmer mit Wasserdampf sowie Abdeckung für einen elektrischen Babykostwärmer und Verfahren zum Erwärmen von Babykost**
Electrical baby feeding bottle warmer with steam, cover for an electrical baby feeding bottle warmer and method for warming baby food
Chauffe-biberons électrique avec vapeur, couvercle pour un chauffe-biberons et méthode pour chauffer de la nourriture pour bébés

(30) Priorität: 04.04.2002 DE 10214905
(43) Veröffentlichungstag der Anmeldung: 08.10.2003
(73) Patentinhaber: DBK David + Baader GmbH, 76870 Kandel (DE)
(72) Erfinder: Binet, Heidi, 76829 Landau (DE); Schäffner, Wolfgang, 76773 Kuhardt (DE); Bummer, Hans-Gerd, 76870 Kandel (DE); Caspers, Michael, 69469 Weinheim (DE)
(74) Vertreter: Grünecker, Kinkeldey, Stockmair & Schwanhäusser Anwaltssozietät

(56) Entgegenhaltungen:
- GB-A- 2 217 975
- GB-A- 2 236 386
- US-A- 6 100 504

## Beschreibung

Die vorliegende Erfindung bezieht sich auf einen elektrischen Babykostwärmer zum Erwärmen von in einem Behälter befindlicher Babykost mittels eines Wärmeübertragungsmediums. Der Babykostwärmer weist einen Becher, in den der Behälter zum Erwärmen einsetzbar ist, und eine elektrische Heizung zum Erwärmen des Becherbodens auf. Die Erfindung bezieht sich außerdem auf eine Abdeckung für einen elektrischen Babykostwärmer sowie auf ein Verfahren zum Erwärmen von in einem Behälter befindlicher Babykost.

Heutige Babykostwärmer werden mit einer sogenannten Randfüllung von ca. 150 ml Wasser befüllt. Solche herkömmlichen Babykostwärmer sind beispielsweise aus der EP 0 696 428 B1, der GB 2 236 386 A oder der US 5,773,795 bekannt. Dabei wird in die Randfüllung eine Babysaugflasche mit Babynahrung oder ein Glasbehälter mit einem Fertiggericht getaucht. Die Randfüllung steht in direktem Kontakt mit einem elektrisch beheizten Element und dient als Wärmeübertragungsmedium zu der Flasche und der darin befindlichen Nahrung. Es wird also zunächst die Randfüllung beheizt, welche ihrerseits den Behälter mit der Babynahrung erwärmt. Mit Hilfe eines Thermostates wird das Heizelement abgeschaltet, sobald die Randfüllung eine bestimmte einstellbare Temperatur erreicht hat. Weil aber für eine schnelle Aufheizung der Nahrung die Temperatur der Randfüllung in der Regel höher als die gewünschte Temperatur der Babykost ist, erfolgt selbst nach dem Abschalten der Heizenergie ein weiterer Temperaturanstieg der Nahrung, sofern die Flasche im Babykostwärmer belassen wird. Daher tritt bei solchen herkömmlichen Babykostwärmem das Problem auf, dass, wenn eine sehr schnelle Aufheizung gewünscht ist, eine sehr hohe Temperatur der Randfüllung eingestellt werden muss und der Erwärmungsvorgang durch Entnehmen des Nahrungsbehälters abgebrochen werden muss, wenn die Temperatur des Wasserbades einen bestimmten Wert erreicht hat. Eine vollautomatisierte und schnelle Erwärmung von Babykost ist mit den herkömmlichen Babykostwärmem schwierig.

Aus der US 6,234,165 B1 ist ein Verfahren und eine Vorrichtung für einen tragbaren, von elektrischer Energiezufuhr unabhängigen Babykostwärmer bekannt, bei dem durch eine exotherme Reaktion Wärme erzeugt wird, welche die Babyflasche aufheizt. Dieser portable, nicht mit elektrischer Energie arbeitende Babyflaschenwärmer besitzt jedoch den Nachteil, dass für seinen Betrieb immer eigens anzuschaffende Chemikalien zur Erzeugung der exothermen Reaktion bereitgehalten werden müssen. Die beiden Reaktionspartner müssen außerdem, bis die exotherme Reaktion erfolgen soll, getrennt voneinander aufbewahrt werden. In der US 6,234,165 B1 wird die exotherme Reaktion dadurch ausgelöst, dass ein Heizelement, beispielsweise aus Magnesium-Eisen-Legierung oder aus Calciumoxid mit einer geeigneten Elektrolytlösung, beispielsweise einer Kochsalzlösung vergossen wird. Das bei dieser Reaktion entstehende heiße Gas gibt im Vorbeiströmen seine Wärmeenergie an die zu erwärmende Babyflasche ab.

Dieser Babykostwärmer birgt jedoch mehrere gravierende Nachteile. Zum einen sind die Chemikalien, die für eine solche exotherme Reaktion in Frage kommen, zu einem großen Teil sicherheitstechnisch und insbesondere im Zusammenhang mit Lebensmitteln nicht unbedenklich. Dies gilt sowohl für die Lagerung und die Handhabung der Ausgangsstoffe, wie auch für die spätere Entsorgung der Endprodukte. So kann beispielsweise bei einer Bildung von Wasserstoffgas durch die exotherme Reaktion einer Magnesium-Eisen-Legierung mit einer Elektrolytlösung Explosionsgefahr bestehen. Calciumoxid ("ungelöschter Kalk") dagegen stellt eine stark ätzende Verbindung dar. Zum anderen besitzen die meisten der entstehenden Gase eine vergleichsweise geringe Verdampfungsenthalpie, so dass die Wärmeübertragungseigenschaften auf die Flasche unbefriedigend sein können.

Wasser weist dagegen eine außerordentlich hohe Verdampfungsenthalpie auf, so dass die beim Kondensieren abgegebene Energie sehr groß ist. Dieser Sachverhalt wird für herkömmliche Geräte zum Sterilisieren von Babymilchflaschen gemäß der EP 0 183 956 B1 oder der US 4,716,278 genützt. Bei diesen Geräten befinden sich die zu sterilisierenden Babyflaschen in einem hermetisch gegenüber der Umgebung abgedichteten dampferfüllten Raum und werden ungefüllt und mit der Öffnung nach unten angeordnet auf nahezu 100°C erhitzt. Diese Sterilisatoren sind für eine Verwendung als Babykostwärmer jedoch nicht ausgelegt.

Die britische Offenlegungsschrift GB 2 217 975 A offenbart einen Dampfkocher, bei dem in einem Behälter Wasser verdampft wird, das zum Erwärmen des Inhalts eines inneren Topfes dient. Ein ringförmiges Gehäuseteil, das mit dem äußeren Behälter verschraubt werden kann und sowohl gegenüber dem inneren Topf, wie auch gegenüber dem äußeren Behälter im Betrieb abgedichtet ist, bildet zusammen mit dem Behälter und dem inneren Topf einen dampfdichten Raum. Eine Ventilanordnung steht über ein Rohr mit diesem Dampfraum in Verbindung und erfüllt die Funktionen des Druckausgleichs und der Rückführung von flüssigem Wasser.

Die US-amerikanische Patentschrift US 6,100,504 zeigt eine Wärmevorrichtung mit einem zugehörigen Krug, wobei der Krug einen Rand aufweist, der mit einem Aufnahmebehälter des Wärmegeräts so abschließt, dass zwischen dem Krug und dem Wärmegerät ein Abstand verbleibt, der als Luftraum bezeichnet wird, und der somit als Wärmeübertragungsmedium Umgebungsluft verwendet.

Im Hinblick auf die gezeigten Nachteile des Standes der Technik besteht die Aufgabe, die der vorliegenden Erfindung zugrunde liegt, darin, einen elektrischen Babykostwärmer, eine Abdeckung für einen elektrischen Babykostwärmer und ein Verfahren zum Erwärmen von in einem Behälter befindlicher Babykost abzugeben, wodurch das Erwärmen von Babykost besonders schnell, energiesparend und sicher erfolgt.

Diese Aufgabe wird erfindungsgemäß durch die Gegenstände der unabhängigen Patentansprüche gelöst.

Vorteilhafte Weiterbildungen der vorliegenden Erfindung sind Gegenstand mehrerer Unteransprüche.

Der vorliegenden Erfindung liegt die Erkenntnis zugrunde, dass der Babykostwärmer nicht mit einer Randfüllung im herkömmlichen Sinne, d. h. einer Wassermenge, die bei eingestelltem Behälter bis an den Rand des Bechers reicht, befüllt wird, sondern nur eine sehr geringe Wassermenge, beispielsweise, bei einem Fassungsvermögen des Bechers von ca. 300 ml, weniger als 30 ml, eingebracht wird, so dass das Wasser bei Zufuhr von elektrischer Heizleistung zu sieden beginnt. Der auf diese Weise erzeugte Wasserdampf umgibt den Babynahrungsbehälter und erwärmt die darin befindliche Nahrung. Dadurch, dass die Becherwände zusammen mit dem Behälter und/oder einer zusätzlicher Abdeckung eine im Wesentlichen geschlossene Kammer zum Zurückhalten von Wasserdampf bilden, wird verhindert, dass die gesamte Wasserdampfmenge nach außen entweicht. Aufgrund der hohen Temperatur und Verdampfungsenthalpie des Wasserdampfes erfolgt das Erwärmen der Nahrung sehr schnell. Durch Kondensation an den Begrenzungen der geschlossenen Kammer, also den Becherwänden, dem Behälter und einer eventuellen Abdeckung, kann das Wasser einer erneuten Heizung und Verdampfung zugeführt werden. Ein wesentlicher Vorteil dieser erfindungsgemäßen Lösung besteht darin, dass nach dem Unterbrechen der Heizleistungszufuhr die geringe Wassermenge rasch unter den Siedepunkt abkühlt und keine weitere Wärmeübertragung an den Nahrungsbehälter mehr auftritt. Demzufolge kann eine Überhitzung der zu erwärmenden Babykost vermieden werden.

Die erfindungsgemäße Erwärmung der Babynahrung über den Behälter umgebenden Wasserdampf ermöglicht ein besonders schnelles Aufheizen der Nahrung und aufgrund der kürzeren Heizzeit eine Reduzierung der benötigten elektrischen Energie. Darüber hinaus wird das Wachstum schädlicher bakterieller Verunreinigungen verhindert, da das Wärmeübertragungsmedium bei jedem Aufheizvorgang in die sehr heiße Dampfphase übergeht.

Dadurch, dass die Leistung und/oder das Temperaturverhalten der elektrischen Heizung zum Verdampfen einer geringfügigen Wassermenge im Bereich des Becherbodens eingerichtet ist, kann außerdem gegenüber herkömmlichen Babykostwärmem die benötigte Wassermenge reduziert werden. Eine solche elektrische Heizung kann beispielsweise einen Widerstand mit positivem Temperaturkoeffizienten, ein sogenanntes PTC-Heizelement aufweisen. Ein solches PTC-Heizelement bietet gegenüber beispielsweise einer Widerstandsdrahtheizung die Vorteile einer hohen Anfangsleistung, wenn sich das Heizelement bei Raumtemperatur befindet, sowie eines selbstregelnden Leistungsverhaltens mit zunehmender Temperatur.

Gemäß einer vorteilhaften Ausführungsform ist die Abdeckung nicht hermetisch schließend in den Becher einsetzbar. Dadurch entweicht bei dem Erwärmungsvorgang ein gewisser Teil des verdampften Wassers und kann für den nächsten Erwärmungsvorgang durch frisches Wasser ersetzt werden. Auf diese Weise können bakterielle Verunreinigungen weitestgehend vermieden werden.

Dadurch, dass die Abdeckung im wesentlichen ringförmig ausgebildet ist und mit dem in den Becher eingesetzten Behälter formschlüssig in Anlage bringbar ist, bildet sich auf besonders einfache Weise eine im wesentlichen geschlossene Kammer zum Zurückhalten von Wasserdampf, die durch die Becherwände, den Becherboden, die Behälteraußenwände und die Innenfläche der Abdeckung gebildet ist.

Sieht man an dem Babykostwärmer eine Leistungssteuervorrichtung, mittels derer die Leistungsabgabe der elektrischen Heizung steuerbar ist, vor, so kann die Geschwindigkeit des Aufheizprozesses in einfacher Weise optimiert werden.

Da bei der erfindungsgemäßen Erwärmung des Babykostbehälters über Wasserdampf nur eine geringfügige weitere Erwärmung nach Abschalten der Leistungszufuhr erfolgt, kann der Erwärmungsvorgang auch über eine Zeitsteuereinrichtung zum Einstellen einer Heizzeit der elektrischen Heizung gesteuert werden. Ein solcher Timer stellt eine besonders einfach zu bedienende und kostengünstige Ausführungsform dar.

Sieht man an der Abdeckung mindestens ein Führungselement zur Positionierung der Abdeckung an dem Becher vor, wobei das Führungselement zwischen die Becherinnenwand und die Außenwand des Behälters eingreift, so kann auf besonders einfache Weise diese Abdeckung gegen seitliches Verrutschen auf dem Babykostwärmer verhindert werden.

Gemäß einer vorteilhaften Ausführungsform ist dieses Führungselement ein im wesentlichen ringförmiger, an die Abdeckung einstückig angeformter Vorsprung. Auf diese Weise kann verhindert werden, dass unzulässig viel Wasserdampf nach außen entweicht.

Um ein Verklemmen der Abdeckung in dem Becher bei thermischer Ausdehnung oder Verkanten zu vermeiden, kann das Führungselement mindestens einen Vorsprung aufweisen, der bei aufgesetzter Abdeckung mit der Innenwand des Bechers in Anlage ist.

Um die zum Verdampfen benötigte Wassermenge ohne weitere Hilfsmittel mit hinreichender Genauigkeit einfüllen zu können, kann an der Abdeckung ein Messgefäß zum Abmessen der benötigten Wassermenge angeformt sein.

Anhand der in den beiliegenden Zeichnungen dargestellten Ausgestaltungen wird die Erfindung im folgenden näher erläutert. Ähnliche oder korrespondierende Einzelheiten sind in den Figuren mit denselben Bezugszeichen versehen. Es zeigen:
- **Figur 1**: einen Schnitt durch einen elektrischen Babykostwärmer mit eingestellter Babyflasche im betriebsbereiten Zustand;
- **Figur 2**: eine Ansicht von unten auf die Abdeckung aus Figur 1;
- **Figur 3**: eine Seitenansicht der Abdeckung aus Figur 1;
- **Figur 4**: eine weitere Seitenansicht der Abdeckung aus Figur 1;
- **Figur 5**: ein Schnittbild der Abdeckung aus Figur 1 entlang der Schnittlinie A-A der Figur 6;
- **Figur 6**: eine Ansicht von oben auf die Abdeckung der Figur 1;
- **Figur 7**: eine Darstellung des Zeitverlaufs der Babykosttemperatur und der aufgenommenen Heizleistung bei Erwärmung der Babykost mittels Wasserdampf im Vergleich zur herkömmlichen Erwärmung mittels eines Wasserbades.

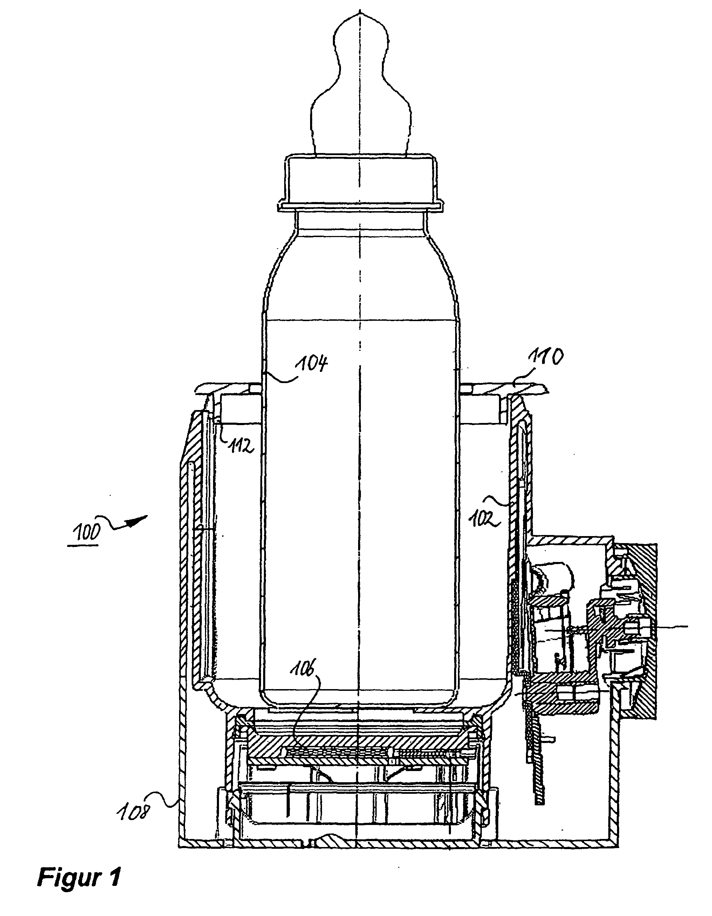

Wie aus der Darstellung der Figur 1 ersichtlich, weist der erfindungsgemäße Babykostwärmer 100 einen Becher 102 auf, in den ein Behälter 104 zum Erwärmen von Babykost, hier eine Babysaugflasche, eingesetzt ist. Eine elektrische Heizung 106, beispielsweise ein PTC-Heizelement, ist so unter dem Bodenbereich des Bechers 102 angebracht, dass dieser bei elektrischer Leitungszufuhr erhitzt wird. Der Becher 102, die elektrische Heizung 106 sowie weitere elektronische Komponenten, wie beispielsweise eine Leistungsregelungsschaltung, sind in einem vorzugsweise aus Kunststoff gefertigten Gehäuse 108 untergebracht.

Erfindungsgemäß weist der Babykostwärmer 100 weiterhin eine Abdeckung 110 auf, die in dem gezeigten Ausführungsbeispiel eine ringförmige Gestalt hat und den Zwischenraum zwischen dem Becher 102 und dem Behälter 104 so gegenüber der Umgebung abdeckt, dass eine im wesentlichen geschlossene Kammer zum Zurückhalten von Wasserdampf entsteht. Die Abdeckung 110 bildet jedoch keine hermetische Abdichtung gegenüber dem Umgebung. Über einen im wesentlichen ringförmigen, an die Abdeckung einstückig angeformten Vorsprung 112, der zwischen die Becherinnenwand und die Außenwand des Behälters 104 eingreift, kann eine Positionierung der Abdeckung und über die ringförmige Öffnung in der Abdeckung auch des Behälters 104 gewährleistet werden.

Um den Inhalt der Babyflasche 104 zu erwärmen, wird vor dem Anbringen der Abdeckung 110 und dem Einstellen der Babyflasche 104 eine geringe Menge Wasser, bei dem hier gezeigten Fassungsvermögen des Bechers 102 von ca. 150 ml beispielsweise 10 bis 20 ml eingefüllt. Nach dem Aufsetzen der Abdeckung 110 und dem Einbringen der Babyflasche 104 kann elektrische Leistung über die elektrische Heizung im Bodenbereich des Bechers 102 zugeführt werden. Da im Bodenbereich des Bechers 102 nur wenig Wasser steht, beginnt dieses rasch zu sieden und in Wasserdampf überzugehen. Der durch die Abdeckung 110, die Becherinnenwände und die Außenwände der Babyflasche 104 gebildete Hohlraum füllt sich auf diese Weise mit Wasserdampf unter Atmosphärendruck. Da Wasser hervorragende Wärmeübertragungseigenschaften hat, wird die in dem Wasserdampf gespeicherte Energie zu einem Großteil an der Babyflasche 104 abgegeben und die darin befindliche Babynahrung wird erwärmt. An den Wänden und der Abdeckung 110 kondensierendes Wasser tropft wieder zurück auf den Boden des Bechers 102 und kann erneut verdampft werden. Wird die Heizleistung abgeschaltet, beispielsweise über eine Zeitschaltuhr oder eine Temperaturüberwachungsschaltung, kondensiert der Wasserdampf sehr rasch und fließt in den Bodenbereich des Bechers 102 zurück. Ein versehentliches Überhitzen der Babynahrung kann auf diese Weise weitestgehend vermieden werden.

Obwohl in Figur 1 als Nahrungsbehälter 104 eine handelsübliche Babysaugflasche gezeigt ist, kann selbstverständlich auch ein beliebiger anderer Behälter 104 verwendet werden. Für herkömmliche Fertignahrungsgläschen beispielsweise kann ein zusätzlicher Adapterring über der Abdeckung 110 zum Haltem des Gläschens vorgesehen werden.

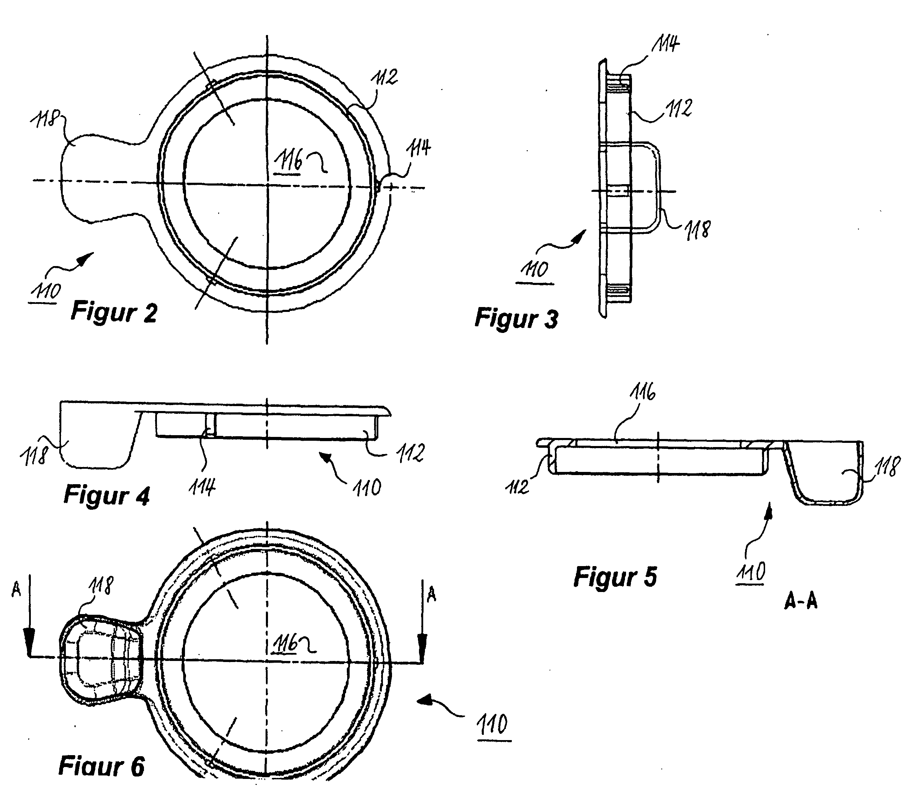

Die Figuren 2 bis 6 zeigen verschiedene Ansichten der Abdeckung 110. Der ringförmige Vorsprung 112, der zwischen den Behälter 104 und die Innenwand des Bechers 102 eingreift, dient sowohl einer Positionierung der Abdeckung 110 wie auch einem zuverlässigen Zurückhalten des Wasserdampfs in den Becher 102. Damit ein Verklemmen oder Verkanten der Abdeckung in dem Becher nicht so leicht auftritt, sind an der der Becherinnenwand zugewandten Seite des ringförmigen Vorsprungs 112 Führungsvorsprünge 114 angeformt, die bei montierter Abdeckung mit der Becherinnenwand in Anlage sind. In dem gezeigten Ausführungsbeispiel sind insgesamt drei um 120° gegeneinander versetzte stegartige Vorsprünge 114 vorgesehen. Die Abdeckung 110 weist außerdem eine kreisförmige Öffnung 116 für den Nahrungsbehälter 104 auf. Bei Verwendung eines Gläschens mit Babyfertignahrung kann ein zusätzlicher Adapter zur Halterung des Gläschens in der Öffnung 116 vorgesehen werden.

Um für einen Benutzer das Befüllen des Babykostwärmers 100 zu vereinfachen und außerdem zu gewährleisten, dass nicht mehr als die zum Verdampfen erforderliche geringe Menge an Wasser eingefüllt wird, ist an die Abdeckung 110 in dem gezeigten Ausführungsbeispiel ein Messgefäß 118 angeformt, dessen Fassungsvermögen genau der benötigten Wassermenge entspricht. Bevor der Behälter 104 in den Becher 102 eingestellt wird, füllt man dieses Messgefäß 118 bis zum Rand mit Wasser und leert den gesamten Inhalt in den Becher 102. Anschließend wird die Abdeckung 110 auf den Becher 102 aufgesetzt und der Nahrungsbehälter 104 eingestellt.

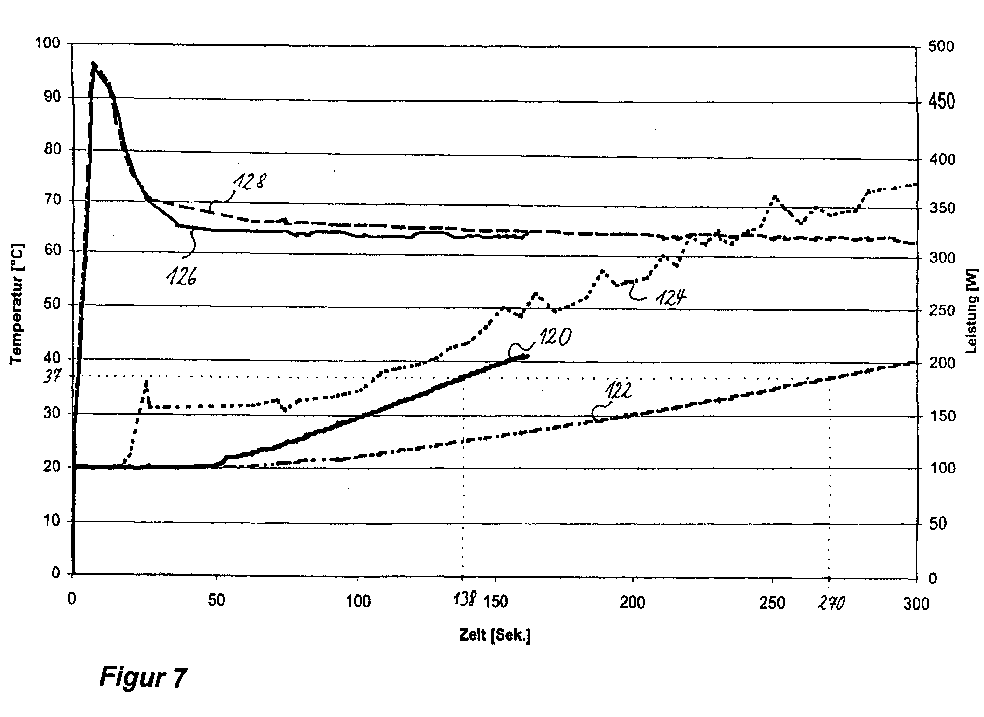

Figur 7 zeigt die Zeitverläufe von Leistungsaufnahme und Temperatur bei der erfindungsgemäßen Erwärmung von Babykost mittels Wasserdampf im Vergleich zu einer Erwärmung mit Hilfe eines herkömmlichen Wasserbades. Den Temperaturverlauf in der Babyflasche bei erfindungsgemäßer Erwärmung über Wasserdampf zeigt die Kurve 120. Demgegenüber stellt die Kurve 122 den Temperaturverlauf des Flascheninhalts bei Erwärmung mittels eines herkömmlichen Wasserbades, d. h. bei Befüllung des Babykostwärmers mit einer Wassermenge von ca. 150 ml, dar. Sofort erkennbar wird die deutlich raschere Erwärmung des Flascheninhalts: Bereits nach 138 Sekunden hat der Flascheninhalt gemäß der Kurve 120 im Dampfbetrieb 37°C erreicht, wogegen, wie aus der Kurve 122 ersichtlich, die Erwärmung auf 37°C im Wasserbad erst nach 270 Sekunden erreicht ist. Wie aus der Kurve 124, welche den Temperaturverlauf der Randfüllung im Falle einer Wasserbaderwärmung zeigt, ersichtlich, hat das Wasserbad zu der Zeit, zu welcher der Flascheninhalt 37°C erreicht, bereits eine Temperatur von ca. 70°C. Würde man in diesem Wasserbad die Flasche nach Ablauf der zum Erwärmen auf 37°C erforderlichen 270 Sekunden belassen, würde sie sich bis auf die Temperatur von 70°C des Wasserbades erwärmen. Die zulässige Höchsttemperatur für den Flascheninhalt wäre damit weit überschritten. Dagegen kühlt die geringe Wassermenge bei der erfindungsgemäßen Dampferwärmung rasch unter den Siedepunkt ab, die Wärmeübertragung ist unterbrochen und es erfolgt nur mehr eine sehr geringe Temperaturüberhöhung. Deshalb muss der Behälter mit der Babynahrung nicht zwingend sofort nach Erreichen der gewünschten Temperatur aus dem Babykostwärmer entfernt werden. Die Kurve 126 zeigt die Leistungsaufnahme bei Dampfbetrieb im Vergleich zu einem herkömmlichen Wasserbadbetrieb. Die beiden Kurven weichen nur unwesentlich voneinander ab, jedoch liegt die Leistungsaufnahme bei Dampfbetrieb unter dem Wert für Randfüllungsbetrieb, da wegen der kürzeren Heizzeit weniger Energie benötigt wird.

Obwohl in den gezeigten Ausführungsbeispielen jeweils nur ein Nahrungsbehälter gezeigt wurde, besteht ein wesentlicher Vorteil der erfindungsgemäßen Lösung darin, dass mehrere Babynahrungsbehälter gleichzeitig erwärmt werden können, wenn man einen größeren Becher 102 und beispielsweise eine Abdeckung 110 mit einer Vielzahl von Öffnungen vorsieht. Gerade bei einer Vielzahl von zu erwärmenden Nahrungsbehältem kommt der Vorteil der geringen Temperaturüberhöhung nach Abschalten der Heizleistung zum Tragen, da nur ein unwesentlicher Unterschied zwischen der Temperatur der zuerst und der Temperatur der zuletzt entnommenen Behälter besteht.

## Patentansprüche

1. Elektrischer Babykostwärmer zum Erwärmen von in einem Behälter (104) befindlichen Substanzen, vorzugsweise Babykost, mittels eines Wärmeübertragungsmediums, wobei der Babykostwärmer (100) einen Becher (102), in den der Behälter (104) zum Erwärmen einsetzbar ist, und eine elektrische Heizung (106) zum Erwärmen des Becherbodens aufweist,
**dadurch gekennzeichnet,**
**dass** die Becherwände zusammen mit dem Behälter (104) und einer Abdeckung (110) eine im Wesentlichen geschlossene Kammer zum Zurückhalten von Wasserdampf bilden, wobei die Abdeckung so ausgeführt ist, dass die Kammer während des Betriebs nicht hermetisch abgeschlossen ist, so dass die Kammer während des Heizvorgangs mit Wasserdampf unter Atmosphärendruck gefüllt ist.

2. Elektrischer Babykostwärmer nach Anspruch 1, **dadurch gekennzeichnet, dass** die Abdeckung (110) im Wesentlichen ringförmig ausgebildet ist und mit dem in den Becher (102) eingesetzten Behälter (104) formschlüssig in Anlage bringbar ist.

3. Elektrischer Babykostwärmer nach einem der Ansprüche 1 oder 2, **dadurch gekennzeichnet, dass** die Leistung und/oder das Temperaturverhalten der elektrischen Heizung (106) zum Verdampfen einer geringfügigen Wassermenge im Bereich des Becherbodens eingerichtet ist.

4. Elektrischer Babykostwärmer nach einem der Ansprüche 1 bis 3, **dadurch gekennzeichnet, dass** dem Becherboden eine geschlossene Seite des Behälters (104) zugewandt ist.

5. Elektrischer Babykostwärmer nach einem der Ansprüche 1 bis 4, **gekennzeichnet durch** eine Leistungssteuervorrichtung, mittels derer die Leistungsabgabe der elektrischen Heizung (106) steuerbar ist.

6. Elektrischer Babykostwärmer nach einem der Ansprüche 1 bis 5, **gekennzeichnet durch** eine Zeitsteuereinrichtung zum Einstellen einer Heizzeit der elektrischen Heizung (106).

7. Elektrischer Babykostwärmer nach einem der Ansprüche 1 bis 6, **dadurch gekennzeichnet, dass** das Volumen des eingefüllten Wassers weniger als 30 ml beträgt.

8. Elektrischer Babykostwärmer zum Erwärmen von in einem Behälter (104) befindlichen Substanzen, vorzugsweise Babykost, mittels eines Wärmeübertragungsmediums, wobei der Babykostwärmer (100) einen Becher (102), in den der Behälter (104) zum Erwärmen einsetzbar ist, und eine elektrische Heizung (106) zum Erwärmen des Becherbodens aufweist,
**dadurch gekennzeichnet,**
**dass** die Becherwände so ausgebildet sind, dass sie zusammen mit dem Behälter (104) eine im Wesentlichen geschlossene Kammer zum Zurückhalten von Wasserdampf bilden, wobei die geschlossene Kammer so ausgeführt ist, dass sie während des Betriebs nicht hermetisch abgeschlossen ist und während des Heizvorgangs mit Wasserdampf unter Atmosphärendruck gefüllt ist.

9. Elektrischer Babykostwärmer nach Anspruch 8, **dadurch gekennzeichnet, dass** er weiterhin Merkmale nach mindestens einem der Ansprüche 3 bis 7 aufweist.

10. Abdeckung für einen elektrischen Babykostwärmer (100) zum Erwärmen von in einem Behälter (104) befindlichen Substanzen, vorzugsweise Babykost, mittels eines Wärmeübertragungsmediums, wobei der Babykostwärmer (100) einen Becher (102), in den der Behälter (104) zum Erwärmen einsetzbar ist, und eine elektrische Heizung (106) zum Erwärmen des Becherbodens aufweist,
**dadurch gekennzeichnet,**
**dass** die Abdeckung (110) zusammen mit den Becherwänden und dem Behälter (104) eine im Wesentlichen geschlossene Kammer zum Zurückhalten von Wasserdampf bildet, wobei die Abdeckung (110) so ausgeführt ist, dass die Kammer während des Betriebs nicht hermetisch abgeschlossen ist, so dass die Kammer während des Heizvorgangs mit Wasserdampf unter Atmosphärendruck gefüllt ist.

11. Abdeckung nach Anspruch 10, **dadurch gekennzeichnet, dass** die Abdeckung (110) mindestens ein Führungselement (112) zur Positionierung der Abdeckung (110) an dem Becher (102) aufweist, wobei das Führungselement (112) zwischen die Becherinnenwand und die Außenwand des Behälters (104) eingreift.

12. Abdeckung nach Anspruch 11, **dadurch gekennzeichnet, dass** das Führungselement (112) ein im wesentlichen ringförmiger, an die Abdeckung (110) einstückig angeformter Vorsprung ist.

13. Abdeckung nach Anspruch 11 oder 12, **dadurch gekennzeichnet, dass** das Führungselement (112) mindestens einen Vorsprung (114) aufweist, der bei aufgesetzter Abdeckung (110) mit einer Innenwand des Bechers (102) in Anlage ist.

14. Abdeckung nach einem der Ansprüche 10 bis 13, **dadurch gekennzeichnet, dass** an der Abdeckung (110) ein Messgefäß (118) zum Abmessen der zum Erwärmen benötigten Wassermenge angeformt ist.

15. Verfahren zum Erwärmen von in einem Behälter befindlicher Babykost mittels einer elektrischen Heizung und eines Wärmeübertragungsmediums, wobei das Verfahren folgenden Schritt aufweist:
Verdampfen von Wasser, so dass sich als Wärmeübertragungsmedium zwischen der elektrischen Heizung und dem Behälter Wasserdampf bildet,
**dadurch gekennzeichnet, dass** das Verfahren vor dem Schritt des Verdampfens von Wasser folgenden Schritt aufweist:
Anbringen der Abdeckung, so dass der Behälter sich zumindest teilweise in einer im Wesentlichen geschlossene Kammer zum Zurückhalten von Wasserdampf befindet, wobei die Abdeckung so ausgeführt ist, dass die Kammer während des Betriebs nicht hermetisch abgeschlossen ist, so dass die Kammer während des Heizvorgangs mit Wasserdampf unter Atmosphärendruck gefüllt ist.

16. Verfahren nach Anspruch 15, **dadurch gekennzeichnet, dass** das Verfahren nach dem Schritt des Verdampfens von Wasser folgenden Schritt aufweist:
Abschalten der Heizleistungszufuhr, wenn eine vorgegebene Heizzeit überschritten ist.

17. Verfahren nach Anspruch 15 oder 16, **dadurch gekennzeichnet, dass** das Verfahren nach dem Schritt des Verdampfens von Wasser folgenden Schritt aufweist:
Abschalten der Heizleistungszufuhr, wenn eine vorgegebene Temperatur an einem Temperaturfühler überschritten ist.

## Claims

1. Electric baby food warmer for heating substances held in a container (104), preferably baby food, by means of a heat transfer medium, the baby food warmer (100) comprising a bowl (102), into which the container (104) can be inserted for heating, and an electric heating (106) for heating the bowl bottom,
**characterized in**
**that** the bowl walls together with the container (104) and a cover (110) form an essentially sealed chamber for retaining water vapor, wherein the cover is formed in a way that said chamber is not sealed hermetically during operation, so that the chamber is filled with water vapor under atmospheric pressure during the heating process.

2. Electric baby food warmer according to claim 1, **characterized in that** the cover (110) has an essentially annular form and can positively fit with the container (104) inserted in the bowl (102).

3. Electric baby food warmer according to claim 1 or 2, **characterized in that** the power and/or the thermal behavior of the electric heating (106) is designed for evaporating a low amount of water in the area of the bowl bottom.

4. Electric baby food warmer according to one of claims 1 to 3, **characterized in that** a closed side of the container (104) is facing the bowl bottom.

5. Electric baby food warmer according to one of claims 1 to 4, **characterized by** a power control device by means of which the power delivery of the electric heating (106) can be controlled.

6. Electric baby food warmer according to one of claims 1 to 5, **characterized by** a time control device for adjusting a heating time of the electric heating (106).

7. Electric baby food warmer according to claim 1 or 6, **characterized in that** the volume of the water filled in is less than 30 ml.

8. Electric baby food warmer for heating substances held in a container (104), preferably baby food, by means of a heat transfer medium, the baby food warmer (100) comprising a bowl (102), into which the container (104) can be inserted for heating, and an electric heating (106) for heating the bowl bottom,
**characterized in**
**that** the bowl walls are shaped in a way that they form together with the container (104) an essentially sealed chamber for retaining water vapor, wherein said chamber is formed in a way that same is not sealed hermetically during operation and is filled with water vapor under atmospheric pressure during the heating process.

9. Electric baby food warmer according to claim 8, **characterized in** further comprising features according to at least one of the claims 3 to 7.

10. Cover for an electric baby food warmer (100) for heating substances held in a container (104), preferably baby food, by means of a heat transfer medium, the baby food warmer (100) comprising a bowl (102), into which the container (104) can be inserted for heating, and an electric heating (106) for heating the bowl bottom,
**characterized in**
**that** the cover (110) forms together with the bowl walls and the container (104) an essentially sealed chamber for retaining water vapor, wherein the cover (110) is formed in a way that said chamber is not sealed hermetically during operation, so that the chamber is filled with water vapor under atmospheric pressure during the heating process.

11. Cover according to claim 10, **characterized in that** the cover (110) comprises at least one guide element (112) for positioning the cover (110) at the bowl (102), the guide element (112) engaging between the bowl's inner wall and the outer wall of the container (104).

12. Cover according to claim 11, **characterized in that** the guide element (112) is an essentially annular projection integrally formed at the cover (110).

13. Cover according to claim 11 or 12, **characterized in that** the guide element (112) comprises at least one projection (114) which lies against an inner wall of the bowl (102) when the cover (110) is put on.

14. Cover according to one of claims 10 to 13, **characterized in that** a measuring vessel (118) for measuring the amount of water required for the heating is formed at the cover (110).

15. Method for heating baby food held in a container by means of an electric heating and a heat transfer medium, said method comprising the following step:
evaporating water in order to generate water vapor as a heat transfer medium between the electrical heating and the container,
**characterized in that** said method comprises the following step before the step of evaporating water:
mounting a cover, so that the container is situated at least partially within an essentially sealed chamber for retaining water vapor, wherein the cover is formed in a way that said chamber is not sealed hermetically during operation, so that the chamber is filled with water vapor under atmospheric pressure during the heating process.

16. Method according to claim 15, **characterized in that** the method comprises the following step after the step of evaporating water:
switching off the heating power supply when a predetermined heating time has been exceeded.

17. Method according to claim 15 or 16, **characterized in that** the method comprises the following step after the step of evaporating water:
switching off the heating power supply when a predetermined temperature at a temperature probe has been exceeded.

## Revendications

1. Chauffe-biberons électrique pour chauffer des substances se trouvant dans un récipient (104), de préférence de la nourriture pour bébés, au moyen d'un milieu caloporteur, le chauffe-biberons (100) présentant un godet (102), dans lequel on peut placer le récipient (104) pour le chauffage, et un chauffage électrique (106) pour chauffer le fond du godet, **caractérisé en ce que** les parois du godet forment, conjointement avec le récipient (104) et un couvercle (110), un espace essentiellement fermé pour retenir de la vapeur d'eau, le couvercle étant conçu de manières que l'espace ne soit pas fermé hermétiquement pendant le fonctionnement, de sorte que l'espace est rempli de vapeur d'eau sous la pression atmosphérique pendant le chauffage.

2. Chauffe-biberons électrique selon la revendication 1, **caractérisé en ce que** le couvercle (110) est conçu sous forme essentiellement circulaire et qu'il peut être assemblé par emboîtement avec le récipient (104) placé dans le godet (102).

3. Chauffe-biberons électrique selon l'une quelconque des revendications 1 ou 2, **caractérisé en ce que** la puissance et/ou le comportement thermique du chauffage électrique (106) est réglé pour l'évaporation d'une petite quantité d'eau dans la zone du fond du godet.

4. Chauffe-biberons électrique selon l'une quelconque des revendications 1 à 3, **caractérisé en ce qu'**un côté fermé du récipient (104) est tourné vers le fond du godet.

5. Chauffe-biberons électrique selon l'une quelconque des revendications 1 à 4, **caractérisé par** un dispositif de réglage de la puissance permettant de régler le débit de puissance du chauffage électrique (106).

6. Chauffe-biberons électrique selon l'une quelconque des revendications 1 à 5, **caractérisé par** un dispositif de minutage pour régler une durée de chauffage du chauffage électrique (106).

7. Chauffe-biberons électrique selon l'une quelconque des revendications 1 à 6, **caractérisé en ce que** le volume d'eau versé est inférieur à 30 mL.

8. Chauffe-biberons électrique pour chauffer des substances se trouvant dans un récipient (104), de préférence de la nourriture pour bébés, au moyen d'un milieu caloporteur, le chauffe-biberons (100) présentant un godet (102), dans lequel on peut placer le récipient (104) pour le chauffage, et un chauffage électrique (106) pour chauffer le fond du godet, **caractérisé en ce que** les parois du godet sont conçues de manière à former, conjointement avec le récipient (104), un espace essentiellement fermé pour retenir de la vapeur d'eau, l'espace fermé étant conçu de manière qu'il ne soit pas fermé hermétiquement pendant le fonctionnement et qu'il soit rempli de vapeur d'eau sous la pression atmosphérique pendant le chauffage.

9. Chauffe-biberons électrique selon la revendication 8, **caractérisé en ce qu'**il présente en outre des caractéristiques selon au moins l'une des revendications 3 à 7.

10. Couvercle pour un chauffe-biberons électrique (100) pour chauffer des substances se trouvant dans un récipient (104), de préférence de la nourriture pour bébés, au moyen d'un milieu caloporteur, le chauffe-biberons (100) présentant un godet (102), dans lequel on peut placer le récipient (104) pour le chauffage, et un chauffage électrique (106) pour chauffer le fond du godet, **caractérisé en ce que** le couvercle (110) forme, conjointement avec les parois du-godet et le récipient (100), un espace essentiellement fermé pour retenir de la vapeur d'eau, dans lequel le couvercle (110) est conçu de manière à ce que l'espace ne soit pas fermé hermétiquement pendant le fonctionnement, de sorte que l'espace est rempli de vapeur d'eau sous la pression atmosphérique pendant le chauffage.

11. Couvercle selon la revendication 10, **caractérisé en ce que** le couvercle (110) présente au moins un élément de guidage (112) pour le positionnement du couvercle (110) sur le godet (102), l'élément de guidage (112) s'avançant entre la paroi interne du godet et la parois externe du récipient (104).

12. Couvercle selon la revendication 11, **caractérisé en ce que** l'élément de guidage (112) est une saillie essentiellement circulaire moulée d'une seule pièce avec le couvercle (110).

13. Couvercle selon la revendication 11 ou 12, **caractérisé en ce que** l'élément de guidage (112) présente au moins une saillie (114) qui est appuyée contre une parois interne du godet (102) lorsque le couvercle (110) est posé.

14. Couvercle selon l'une quelconque des revendications 10 à 13, **caractérisé en ce qu**'un récipient gradué (118) pour mesurer la quantité d'eau nécessaire pour le chauffage est moulé dans le couvercle (110).

15. Procédé pour chauffer de la nourriture pour bébés se trouvant dans un récipient au moyen d'un chauffage électrique et d'un milieu caloporteur, le procédé comprenant l'étape suivante :
évaporation d'eau, de sorte qu'il se forme de la vapeur d'eau en tant que milieu caloporteur entre le chauffage électrique et le récipient,
**caractérisé en ce que** le procédé présente, avant l'étape d'évaporation d'eau, l'étape suivante :
pose du couvercle, de sorte que le récipient se trouve au moins en partie dans un espace essentiellement fermé pour retenir de la vapeur d'eau, le couvercle étant conçu de manière à ce que l'espace ne soit pas fermé hermétiquement pendant le fonctionnement, de sorte que l'espace est rempli de vapeur d'eau sous la pression atmosphérique pendant le chauffage.

16. Procédé selon la revendication 15, **caractérisé en ce que** le procédé présente, après l'étape d'évaporation d'eau, l'étape suivante :
arrêt de l'apport thermique lorsqu'un temps de chauffage prédéfini a été dépassé.

17. Procédé selon la revendication 15 ou 16, **caractérisé en ce que** le procédé présente, après l'étape d'évaporation d'eau, l'étape suivante :
arrêt de l'apport thermique lorsqu'une température prédéfinie a été dépassée sur, un capteur de température.
